# EUROPEAN PATENT SPECIFICATION

(11) **EP 2 422 659 B1**
(45) Date of publication and mention of the grant of the patent: **28.01.2015**
(21) Application number: 11178086.2
(22) Date of filing: 19.08.2011
(51) Int. Cl.: A47G 7/04

(54) **Double window flower box**
Doppel-Blumenkasten
Balconnière double

(30) Priority: 27.08.2010 IT FI20100050 U
(43) Date of publication of application: 29.02.2012
(73) Proprietor: BA.MA. S.p.A., 55011 Altopascio (Lucca) (IT)
(72) Inventor: Baiocchi, Renzo, 55015 Montecarlo (Lucca) (IT)
(74) Representative: Soldatini, Andrea

(56) References cited:
- EP-A2- 0 131 089
- FR-A- 1 442 219
- US-A- 3 302 324
- US-A1- 2005 193 625
- US-S1- D 313 374

## Description

The present invention refers to a window flower box. More in particular the present invention concerns a double window flower box adapted to be hung or linked to a supporting structure, for example and in particular a railing or a parapet of a balcony, a terrace or the like.

USD313374 describes a dual window flower box according to the preamble of claim 1 adapted to be connected to a support as a railing or a parapet of a balcony. Another example of a window flower box is described in US2005/0193625.

According to the present invention a window flower box is provided that comprises at least two pots for plants and flowers and connection and linking elements for connecting the pots mutually and to a supporting structure; the pots are arranged on opposite sides of the supporting structure when the connection and linking elements are leant on the supporting structure.

Each pot presents an abutment element adapted to abut against the supporting structure. The pots have respective abutment elements, so the window flower box can be connected to supporting structures having different shapes and sizes. The abutment elements are preferably adjustable to project more or less from the corresponding pot and to adapt the window flower box to supporting structures having different shapes and sizes. The window flower box also comprises an elastic adjustment system comprising a toothing, each pot comprising elastic means adapted to engage with the toothing. Each abutment element comprises a driving flap in a respective sliding seating formed on the corresponding pot, and a head associated to the flap to define an abutment surface of the pot to the support structure, The driving flap comprises the toothing for acting in cooperation with a stop pawl inside the sliding seating. Each pot comprises a cavity in correspondence of the abutment element on a side wall of the pot, that, when the flower box is fixed to the support structure, is opposed to the corresponding side wall of the other pot, the head being houseable in the cavity when the abutment element is fully retracted with the flap inserted in the sliding seating.

Therefore the window flower box can be correctly adapted for the connection for example to a railing made from thin metal, or to a brick railing or to a parapet, having greater transverse dimensions, always keeping each pot correctly oriented, i.e. generally almost vertical.

Preferably, the two pots are vase, flowerpot, jar etc., connected to one another by two connection and linking elements in the form of elongated rods or bars which are inserted in corresponding channels formed in the two pots. Each elongated rod connects reciprocally the two pots: in particular an end of each elongated rod is inserted into the channel of one of the two pots and the other end into the opposite channel of the other pot. The rods define the mechanical connection between the two pots and at the same time the abutment against the railing, the parapet or another supporting structure, with respect to which the two pots are positioned on opposite sides.

Advantageously in some embodiments the connection and linking elements and the pots are adjustable to connect said pots at an adjustable distance. Preferably, a safety element is provided to mutually lock the connection and linking elements and the two pots to fix the reciprocal position and so as to avoid an accidental detachment of the pot/s from the connection and the supporting elements.

In some embodiments each pot comprises a flange surrounding the upper edge of the pot itself. The flange is at least partially channel-shaped so to permit the insertion of the rods, which define the connection and leaning elements.

Further characteristics and advantages of the window flower box according to the present invention are defined in the attached claims and will be apparent from the following description of a preferred embodiment thereof, solely provided by way of nonlimiting example, with reference to the attached drawings, wherein:
- figure 1 is a plan view of the window flower box with the two pots in a position of maximum distance;
- figure 2 is a plan view of the window flower box of Fig. 1 with the two pots in a position of minimum distance;
- figures 3 and 4 are section views taken along arrows III-III and IV-IV of Figs. 1 and 2; and
- figures 5 and 6 are cross section views taken along arrows V-V and VI-VI of Figs. 1 and 2;
- figure 7 is a section view according to a vertical plane of a plurality of pots stacked up of one another;
- figure 8 is a detailed view of the safety pin for the mutual locking of the connection and linking elements with the pots.

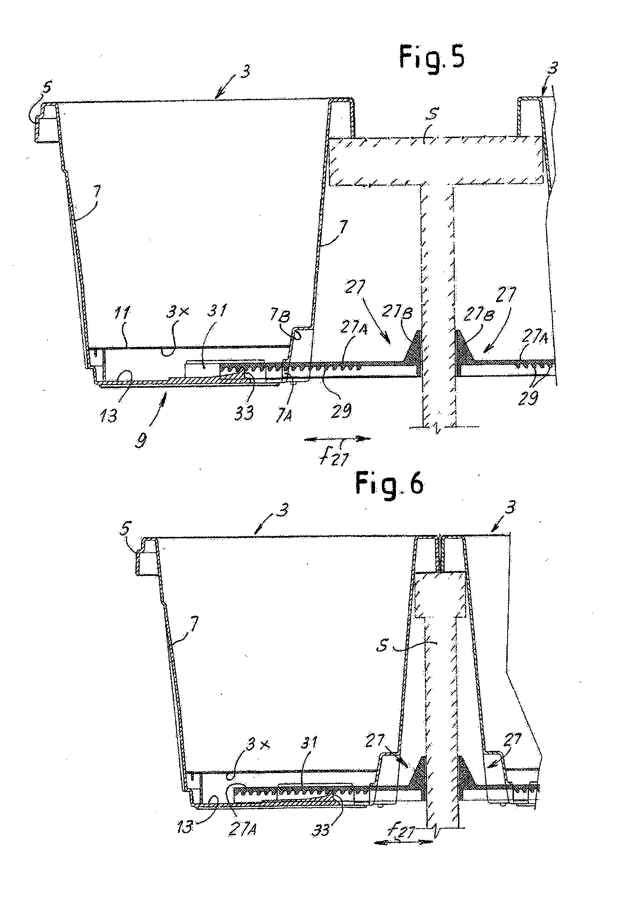

With reference to the above figures, the window flower box is indicated with reference numeral 1. The window flower box comprises two pots, each indicated with reference numeral 3, substantially defined by trays or vases in which plants or flowers can be inserted, for decorating a balcony, a terrace or the like. The two pots 3 are advantageously made in molded synthetic resin and each have, as shown in particular in figures 5, 6 and 7, a tapered profile, with side walls that are inclined so as to allow many pots to be easily stacked up of one another and inside one another for storing and transport reasons.

Each pot comprises a flanged edge 5, side walls 7 and a base 9 formed by a bottom wall 13 surrounded by a step 11.

In the preferred embodiment, each pot has an almost rectangular-shaped plan view with two rounded corners and an elongated development, with a main side 3L which, in the mounted configuration of the window flower box, extends along the supporting structure S indicated with a broken line in figures 5 and 6 and that can be defined by a wall, a railing or the like.

Along the short sides of each pot the flanged edge 5 defines downward opened channels 5A, in which connection and linking elements 21 are inserted; the connection and linking elements 21 are used to mutually connect two pots 3 and to link them to the supporting structure S.

The connection and linking elements 21 are elongated rods or bars for example with a generally rectangular section. The connection and linking elements 21 can be made in molded synthetic resin, similarly to the pots 3. Advantageously, as shown in the drawings, each elongated bar defining the connection and linking element 21 has a plurality of through openings 21A which, in the example illustrated, are rectangular-shaped.

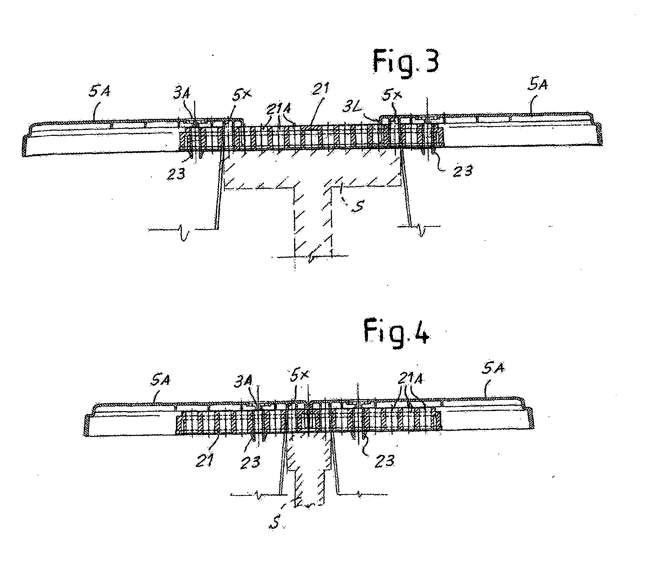

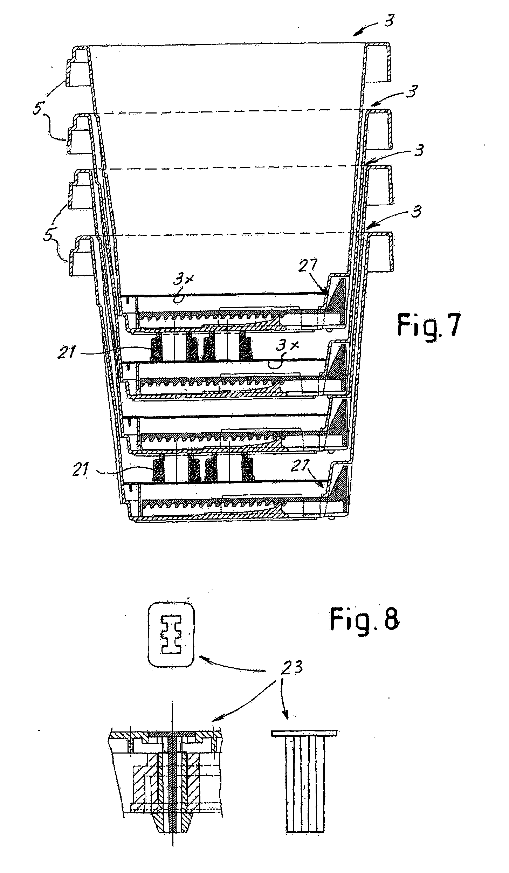

In correspondence of the channels 5A, windows 3A are provided (preferably one for each channel 5A) through which respective safety means can be inserted; for example the safety means can be defined by locking elements like elastic or expandable pins 23, illustrated in detail in figure 8. The elastic pins 23 present a stem which is substantially rectangular-shaped with an enlarged end; a central notch formed on the pin permits the stem itself to be elastic; consequently the pin can be inserted through the windows 3A and the through openings 21 A of the bars or connection and linking elements 21. The central notch permits also the opening up (figures 3 and 5) of the pin when it is inserted so as to avoid its accidental removal thanks to an undercut defined by the enlarged end of the pin.

With two pins 23 it is possible to mutually lock each bar 21 in two opposite channels 5A of the two pots 3 arranged on opposite sides of a supporting structure S. For a greater stability of the connection between the channels 5A of the pots and bars 21, in some embodiments, a protrusion 5X can be provided in each channel, that engages in a respective through opening 21A of the corresponding bar 21.

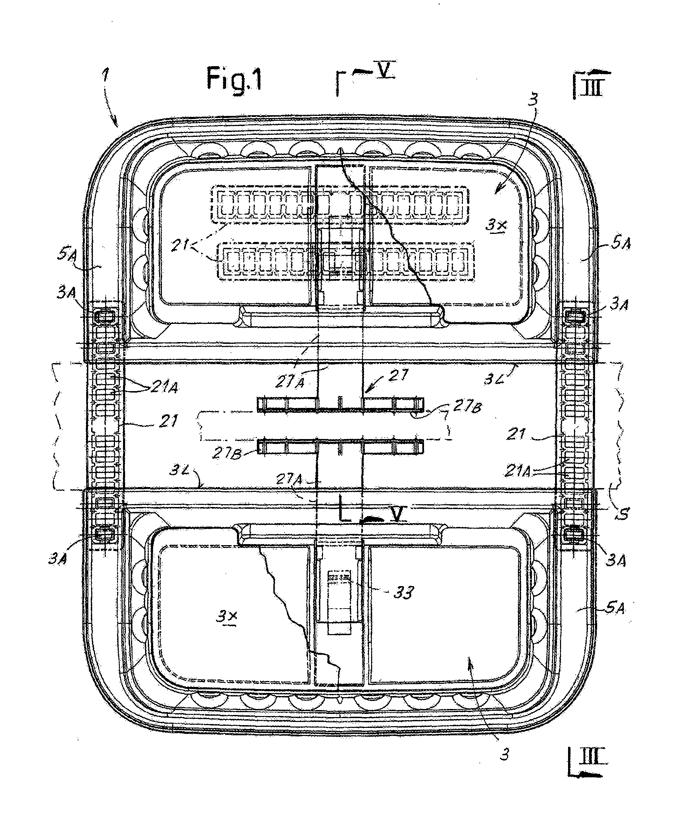

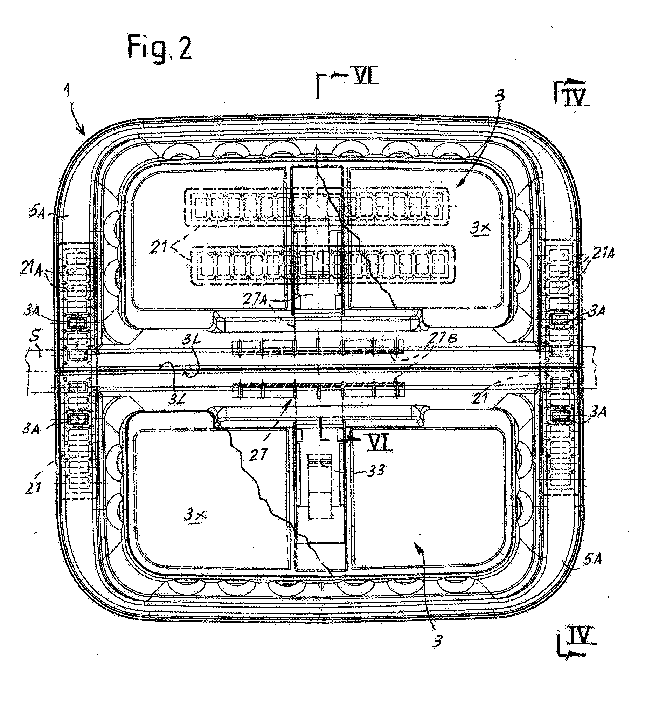

The presence of a plurality of through openings 21A in each bar or connection and linking element 21 permits the adjustment of the distance between the two pots 3. In figures 1 and 3 the two pots 3 are arranged at their mutual maximum distance for example to be linked to the supporting structure S having greater width as schematically indicated in figure 5. In figures 2 and 4 the pots 3 are brought together to be linked to a supporting structure S, the width of which is equal or shorter than the width of the flanged edge 5 (figure 6).

Each pot 3 comprises a respective abutment element adapted to abut against the supporting structure S, in order to stabilize the window flower box formed by the two pots 3 mutually connected by the connection and linking elements 21 and to prevent it from oscillating around a horizontal axis parallel to the surface of the supporting structure S on which the connection and linking elements 21 rest. The abutment elements are indicated with reference numerals 27 in the drawings.

Each abutment element 27 comprises a driving flap 27A and a head 27B. The driving flap has (see in particular figure 5) a toothing 29 on the lower side, i.e. facing towards the bottom wall 13 of the respective pot 3. The flap 27A is inserted in a sliding seat 31 moulded on the inner face of the bottom wall 13. A stop pawl 33, which cooperates with the toothing 29, is associated to the sliding seat 3.

A system for adjusting the position of the abutment element 27 with respect to the pot 3 is thus obtained. The abutment element 27 can be extracted more or less according to the double arrow f27 (figures 5 and 6) so as to adapt it to the shape of the supporting structure S and to define with the head 27B an abutment which, by resting against the supporting structure S, keeps the respective pot 3 in the correct position, approximately vertical.

The side wall 7 of the pot 3 facing towards the supporting structure S presents an opening 7A to permit the passage of the flap 27A of the respective abutment element. The opening 7A is arranged in correspondence of a cavity 7B having shape and depth that are suitable for entirely housing the head 27B of the abutment element, as shown in the section view of figure 1, when the flap 27A of the abutment element 27 is integrally retracted inside the pot 3.

In such a way, when the window flower box is not used, for example during transport, exposure in store or the storage in a greenhouse or the like, the abutment elements 27 can be completely retracted inside the volume defined by the walls 7 and 9 of the respective pot 3 permitting the pots 3 to stack up of one another. In this configuration the connection and linking elements 21 can be housed inside one of the two pots 3 forming a complete window flower box, as shown in figure 7.

In some embodiments, each pot 3 can have a bottom 3X, advantageously independent with respect to the pot, insertable inside the pot 3 so as to cover and protect the driving flap 27A of the respective abutment element 27 and its sliding seat 31.

The present invention has been described with reference to preferred embodiments. It should be understood that there can be other embodiments falling within the same inventive concept, as defined by the scope of protection of the attached claims.

## Claims

1. A window flower box (1) comprising at least two pots (3) for plants and flowers, connection and linking elements (21) for connecting said pots mutually and to a supporting structure (S), said pots being arranged on opposite sides of said supporting structure (S) when said connection and linking elements (21) are leant on said supporting structure (S), said window flower box being **characterised by** each pot (3) comprising a corresponding abutment element (27) adapted to abut against said supporting structure (S), said abutment element (27) is adjustable to project more or less from the corresponding pot (3) and comprises an elastic adjustment system (29, 31, 33, 27A), said elastic adjustment system comprising a toothing (29) and each pot (3) comprising elastic means (33, 27A) adapted to engage with said toothing (29), each abutment element (27) comprising a driving flap (27A) in a respective sliding seating (31) formed on the corresponding pot (3), and a head (27B) associated to said flap to define an abutment surface of the pot (3) to the support structure (S), said driving flap (27A) comprising said toothing (29) adapted to act in cooperation with a stop pawl (33) inside said sliding seating (31), each pot (3) comprising a cavity (7B) in correspondence of said abutment element (27) on a side wall of said pot (3), that, when the flower box is fixed to said support structure, is opposed to the corresponding side wall of the other pot (3), said head (27B) of said abutment element (27) being houseable in said cavity (7B) when said abutment element (27) is fully retracted with said flap (27A) inserted in said sliding seating (31).

2. The window flower box (1) according to claim 1, wherein said connection and linking elements (21) of said at least two pots (3) are adjustable to connect said at least two pots in a changeable distance.

3. The window flower box according to claim 2, comprising safety means (23) to mutually lock said connection and linking elements (21) to said at least two pots (3).

4. The window flower box according to claims 1, 2 or 3, wherein said connection and linking elements (21) comprise at least an elongated rod (21) for each of said pots insertable in a corresponding channel (5A) formed in each pot.

5. The window flower box according to claim 4, wherein each of said elongated rods (21) comprises a plurality of through openings (21A); each of said channels (5A) comprising at least a window (3A) in correspondence of which one of said through openings (21A) is arranged when said elongated rod (21) is inside said channel; each of said elongated rods (21) are connected inside said channel through a lock element (23) that is inserted transversally to the rod through the corresponding window (3A) of the channel and the corresponding through opening (21A) of the rod (21).

6. The window flower box according to claim 5, wherein said lock element comprises an elastic pin (23).

7. The window flower box according to any one of claims 4 to 6, wherein each pots (3) comprises two downward opened channels said channels being formed in a flanged edge (5) of the correspondence pot (3) and wherein said at least two pots (3) of said flower box are two pots (3) connected by two elongated rods (21).

8. The window flower box according to any one of claims 1 to 7, wherein each of said abutment elements (27) is associated in a sliding manner to a base of the respective pot (3).

9. The window flower box according to any one of the previous claims, wherein each pot (3) comprises tapered side walls that permit the stacking of more pots one inside the other.

10. The window flower box according to any one of the previous claims, made in moulded synthetic resin.

## Patentansprüche

1. Fensterblumenkasten (1), enthaltend wenigstens zwei Töpfe (3) für Pflanzen, Verbindungs- und Kopplungselemente (21) zum Verbinden der Töpfe gegenseitig und mit einer Haltestruktur (S), wobei die Töpfe auf entgegengesetzten Seiten der Haltestruktur (S) angeordnet sind, wenn die Verbindungs- und Kopplungselemente (21) an der Haltestruktur (S) abgestützt sind, wobei der Fensterblumenkasten **dadurch gekennzeichnet ist, dass** jeder Topf (3) ein entsprechendes Anlageelement (27) enthält, das ausgelegt ist, um gegen die Haltestruktur (S) anzuliegen, dass das Anlageelement (27) einstellbar ist, um mehr oder weniger von dem entsprechenden Topf (3) vorzustehen und ein elastisches Einstellsystem (29, 31, 33, 27A) enthält, dass das elastische Einstellsystem eine Zahnung (29) enthält und jeder Topf (3) Elastikeinrichtungen (33, 27A) enthält, die zum Eingriff mit der Zahnung (29) ausgelegt sind, dass jedes Anlageelement (27) eine Treiblasche (27A) in einem jeweiligen Schiebesitz (31), der an dem entsprechenden Topf (3) ausgebildet ist, und einen Kopf (27B) enthält, der zu der Lasche gehört, um eine Anlagefläche des Topfes (3) an der Haltestruktur (S) zu bilden, wobei die Treiblasche (27A) die Zahnung (29) enthält, die ausgelegt ist, um in Kooperation mit einer Stoppsperre (33) innerhalb des Schiebesitzes (31) zu wirken, dass jeder Topf (3) einen Hohlraum (7B) entsprechend dem Anlageelement (27) an einer Seitenwand des Topfes (3) enthält, die, wenn der Blumenkasten an der Haltestruktur befestigt ist, gegenüber der entsprechenden Seitenwand des anderen Topfes (3) liegt, und dass der Kopf (27B) des Anlageelementes (27) in dem Hohlraum (7B) unterbringbar ist, wenn das Anlageelement (27) vollständig zurückgezogen ist, wobei die Lasche (27A) in den Schiebesitz (31) eingefügt ist.

2. Fensterblumenkasten (1) nach Anspruch 1, wobei die Verbindungs- und Kopplungselemente (21) der wenigstens zwei Töpfe (3) einstellbar sind, um die wenigstens zwei Töpfe in einem veränderbaren Abstand zu verbinden.

3. Fensterblumenkasten (1) nach Anspruch 2, enthaltend Sicherheitseinrichtungen (23) zum gegenseitigen Verriegeln der Verbindungs- und Kopplungselemente (21) an den wenigstens zwei Töpfen (3).

4. Fensterblumenkasten (1) nach Anspruch 1, 2 oder 3, wobei die Verbindungs- und Kopplungselemente (21) für jeden der Töpfe (3) wenigstens einen länglichen Stab (21) enthalten, der in einen entsprechenden Kanal (5A) einsetzbar ist, der in jedem Topf ausgebildet ist.

5. Fensterblumenkasten (1) nach Anspruch 4, wobei jeder der länglichen Stäbe (21) eine Mehrzahl von Durchgangsöffnungen (21A) enthält; jeder der Kanäle (5A) wenigstens ein Fenster (3A) enthält, entsprechend dem eine der Durchgangsöffnungen (21A) angeordnet ist, wenn der längliche Stab (21) innerhalb des Kanals ist; jeder der länglichen Stäbe (21) innerhalb des Kanals durch ein Verriegelungselement (23) verbunden ist, das quer zu dem Stab durch das entsprechende Fenster (3A) des Kanals und die entsprechenden Durchgangsöffnungen (21A) des Stabes (21) eingefügt ist.

6. Fensterblumenkasten (1) nach Anspruch 4, wobei das Verriegelungselement einen elastischen Stift (23) enthält.

7. Fensterblumenkasten (1) nach einem der Ansprüche 4 bis 6, wobei jeder der Töpfe (3) zwei nach unten geöffnete Kanäle enthält, wobei die Kanäle in einem Flanschrand (5) des Entsprechungstopfes (3) ausgebildet sind, und wobei die wenigstens zwei Töpfe (3) des Fensterblumenkastens zwei Töpfe (3) sind, die durch zwei längliche Stäbe (21) verbunden sind.

8. Fensterblumenkasten (1) nach einem der Ansprüche 1 bis 7, wobei jedes der Anlageelemente (27) in einer verschiebbaren Weise zu einer Basis des jeweiligen Topfes (3) gehört.

9. Fensterblumenkasten (1) nach einem der vorhergehenden Ansprüche, wobei jeder Topf (3) verjüngend verlaufende Seitenwände hat, die das Stapeln von mehreren Töpfen jeweils einer in dem anderen gestatten.

10. Fensterblumenkasten (1) nach einem der vorhergehenden Ansprüche, geformt aus synthetischem Harz.

## Revendications

1. Balconnière (1) comportant au moins deux pots (3) pour des plantes et des fleurs, des éléments de connexion et de liaison (21) pour relier lesdits pots entre eux et à une structure porteuse (S), lesdits pots étant disposés de part et d'autre de ladite structure porteuse (S) quand lesdits éléments de connexion et de liaison (21) s'appuient sur ladite structure porteuse (S), ladite balconnière étant **caractérisée par le fait que** chaque pot (3) comprend un élément de butée correspondant (27) adapté pour buter contre ladite structure porteuse (S), ledit élément de butée (27) est ajustable pour faire plus ou moins saillie du pot correspondant (3) et comporte un système d'ajustement élastique (29, 31, 33, 27A), ledit système d'ajustement élastique comprenant une denture (29) et chaque pot (3) comprenant des moyens élastique (33, 27A) adaptés pour coopérer avec ladite denture (29), chaque élément de butée (27) comportant une patte de guidage (27A) dans un siège de coulissement respectif (31) réalisé sur le pot correspondant (3), et une tête (27B) associée à ladite patte pour définir une surface de butée pour le pot (3) sur la structure porteuse (S), ladite patte de guidage (27A) comportant ladite denture (29) adaptée pour agir en coopération avec un cliquet d'arrêt (33) à l'intérieur du dit siège de coulissement (31), chaque pot (3) comprenant une cavité (7B) en correspondance avec ledit élément de butée (27) sur une paroi latérale du dit pot (3) qui, quand la balconnière est fixée sur ladite structure porteuse, est opposée à la paroi latérale correspondante de l'autre pot (3), ladite tête (27B) du dit élément de butée (27) pouvant se loger dans ladite cavité (7B) quand ledit élément de butée (27) est entièrement rétracté avec ladite patte (27A) insérée dans ledit siège de coulissement (31).

2. La balconnière (1) selon la revendication 1, dans laquelle lesdits éléments de connexion et de liaison (21) des dits au moins deux pots (3) sont ajustables pour relier lesdits au moins deux pots à une distance variable.

3. La balconnière selon la revendication 2, comprenant des moyens de sécurité (23) pour fixer mutuellement lesdits éléments de connexion et de liaison avec lesdits au moins deux pots (3).

4. La balconnière selon l'une des revendications 1 à 3, dans laquelle lesdits éléments de connexion et de liaison (21) comportent au moins une tige allongée (21) pour chacun des dits pots insérable dans un canal correspondant (5A) formé dans chaque pot.

5. La balconnière selon la revendication 4, dans laquelle chacune des dites tiges allongées (21) comporte une pluralité d'orifices traversants (21A) ; chacun des dits canaux (5A) comprenant au moins une fenêtre (3A) en correspondance de laquelle se trouve un des dits orifices traversants (21A) quand ladite tige allongée (21) est à l'intérieur du dit canal ; chacune des dites tiges allongées (21) est fixée à l'intérieur du dit canal au moyen d'un élément de blocage (23) inséré transversalement dans la tige via la fenêtre correspondante (3A) du canal et un orifice en correspondance (21 A) de la tige (21).

6. La balconnière selon la revendication 5, dans laquelle ledit élément de blocage comporte une goupille élastique (23).

7. La balconnière selon l'une quelconque de revendications 4 à 6, dans laquelle chaque pot (3) comporte deux canaux ouverts vers le bas, lesdits canaux étant formés dans un bord replié (5) du pot correspondant (3) et dans laquelle lesdits au moins deux pots (3) sont reliés par deux tiges allongées (21).

8. La balconnière selon l'une quelconque des revendications 1 à 7, dans laquelle chacun des dits éléments de butée (27) est monté de façon coulissante dans une embase du pot respectif (3).

9. La balconnière selon l'une quelconque des revendications précédentes, dans laquelle chaque pot (3) comporte des parois latérales coniques qui permettent l'empilement de plusieurs pots les uns dans les l'autres.

10. La balconnière selon l'une quelconque des revendications précédentes, réalisée en résine synthétique moulée.
